# EUROPÄISCHE PATENTSCHRIFT

(11) **EP 1 937 116 B1**
(45) Veröffentlichungstag und Bekanntmachung des Hinweises auf die Patenterteilung: **14.12.2011**
(21) Anmeldenummer: 06793974.4
(22) Anmeldetag: 05.10.2006
(51) Int. Cl.: A47J 31/06

(54) **PADHALTER**
PAD HOLDER
SUPPORT DE DOSETTES

(30) Priorität: 14.10.2005 DE 102005049244
(43) Veröffentlichungstag der Anmeldung: 02.07.2008
(73) Patentinhaber: BSH Bosch und Siemens Hausgeräte GmbH, 81739 München (DE)
(72) Erfinder: KRAMER, Siegmund, 83417 Kirchanschöring (DE); MAGG, Johann, 83368 St. Georgen (DE)
(86) Internationale Anmeldenummer: PCT/EP2006/067088
(87) Internationale Veröffentlichungsnummer: WO 2007/042459

(56) Entgegenhaltungen:
- WO-A-03/105645
- WO-A-2005/063089
- WO-A-2006/111890
- DE-A1- 10 344 328

## Beschreibung

Die Erfindung betrifft einen Padhalter, der als Unterteil zusammen mit einem Oberteil eine Brühkammer insbesondere einer Niederdruckkaffeemaschine bildet und ein Aufnahmebecken zur Aufnahme eines Softpads umfasst. Als Softpads werden Filterkissen aus Filterpapier bezeichnet, die mit Kaffeepulver gefüllt sind und in einen Padhalter eingelegt werden können. Das Aufnahmebecken für das Soft- oder Kaffeepad wird von einem in der Betriebslage im Wesentlichen waagrechten Boden und dazu senkrecht aufsteigenden Seitenwänden gebildet. Außerdem trägt er Rippen zur Abstützung des Softpads und enthält eine zentrale Ablauföffnung zur Ableitung des Kaffeeextraktes.

Niederdruckkaffeemaschinen, in denen derartige Padhalter zum Einsatz kommen, sind allgemein bekannt. Sie beaufschlagen das Kaffeepad mit heißem Wasser, das im Wesentlichen unter Dampfdruck steht und im Allgemeinen durch einen Boiler erhitzt wird. Im Padhalter laugt das heiße Wasser den Inhalt des Kaffeepads aus und bildet ein Kaffeeextrakt. Der Kaffeeextrakt wird anschließend durch eine Düse unterhalb des Padhalters gedrückt, um unter Bildung einer feinblasigen Schaumschicht (Kaffeecrema) in eine Tasse abgegeben zu werden. Die Entwicklungsbemühungen vieler Kaffeemaschinen-Hersteller richten sich dabei auf die Herstellung einer besonders feinblasigen und möglichst dauerhaften Crema. Aus der WO 03/105645A1 ist eine Vorrichtung zum Zubereiten eines Getränks, wie z.B. Kaffee oder Cappuccino bekannt, die dadurch gekennzeichnet ist, dass der Auslassweg mit mindestens einem Siphon versehen ist, der derart in Aktion tritt, dass das Getränk über den Siphon aus dem Pufferreservoir ausgegeben wird, wenn der Füllstand in dem Siphon eine vorbestimmte Höhe übersteigt. Aus der WO 2006/111890 A1 ist ferner eine Getränkezubereitungsvorrichtung, wie z.B. eine Kaffeemaschine, bekannt, mit Mitteln zum Erzeugen einer Rotation in einem Getränkefluss, der sich Ober eine Auslassfläche zu einer in der Auslassfläche angeordneten Auslassöffnung hin bewegt, wobei die rotationserzeugenden Mittel eine gekrümmte Leitfläche umfassen, die einen Rotationsraum umgibt, in dem sich die Auslassöffnung befindet, und wobei zumindest ein Einlass zum Verschaffen von Zugang zu dem Rotationsraum in den rotationserzeugenden Mitteln angeordnet ist, welcher Einlass die Leitfläche unterbricht.

Aus der DE 103 44 328 A1 ist eine Kaffeebrühvorrichtung bekannt, die eine Brühkammer zur Aufnahme eines mit Kaffeepulver gefüllten Filterkissens und eine Aufschäumeinrichtung zum Erzeugen der Crema umfasst. Die Aufschäumeinrichtung weist dazu einen Verdüsungsauslass der Brühkammer und eine dem Verdüsungsauslass stromaufwärts vorgeordnete Wirbeleinrichtung zum Erzeugen einer Drallströmung auf. Die Wirbeleinrichtung wird dadurch gebildet, dass am Grund der Brühkammer also auf einem Bodenabschnitt des Padhalters, bogenförmige Auflagerippen angeordnet sind. Die Auflagerippen erstrecken sich im Bereich der Brühkammer in Richtung auf den Zentrumsbereich hin. Zwischen sich bilden sie Strömungskanäle aus, deren Querschnitt sich in Richtung auf den Zentrumsbereich verkleinert. Durch diese Anordnung der Auflagerippen wird in dem Kaffeeextrakt eine Drallströmung induziert, deren Strömungsgeschwindigkeit zum Verdüsungsauslass hin sich wegen der abnehmenden Querschnitte und der am Verdüsungeauslass zunehmenden Kaffeeextraktmenge stark erhöht. Der vor dem Verdüsungsauslass dem Kaffeeextrakt induzierte Drall soll stromab des Verdüsungsauslasses bei entsprechender Gerätekonzeption eine zufrieden stellende Cremabildung bewirken.

Aufgabe der Erfindung ist es, einen Padhalter anzugeben, dessen Gestaltung sicherstellt, dass das Pad vollständig und gleichmäßig ausgelaugt wird und der Kaffeeextrakt dadurch einen abgerundeten und vollen Kaffeegeschmack erhält.

Diese Aufgabe wird erfindungsgemäß dadurch gelöst dass die einen unterbrochenen spiralförmigen Verlauf aufweisenden Rippen auf dem waagrechten Boden des Padhalters zur Regulierung des Abflusses derart angeordnet sind, dass sie sich zur Ablauföffnung hin erstrecken und einen schlangenförmigen Fließweg des Extrakts erzwingen. Unter dem schlangen- oder mäanderförmigen Fließweg ist zu verstehen, dass der Kaffeeextrakt von einem Eintrittspunkt am Rand des Padhalters aus nur unter mehrmaliger Richtungsänderung zur Ablauföffnung gelangen kann. Ein direkter radialer oder auch bogenförmiger Abfluss ist ihm verwehrt. Der Zweck dieser Rippenanordnung besteht also darin, dass die Strömung gegenuber einem radialen oder einem mit einem aufgezwungenen Drall versehenen Abfluss verlangsamt wird. Die Verringerung der Fließgeschwindigkeit vor dem Auslauf vermeidet außerdem die Entstehung von Turbulenzen und führt zu einem weitestgehend laminaren Abfluss. Die reduzierte Strömungsgeschwindigkeit in einem Bereich unterhalb des Pads führt auch zu einer geringeren Strömungsgeschwindigkeit innerhalb des Pads. Dadurch kann das Pad vollständiger und gleichmäßiger ausgelaugt werden, wodurch mehr Inhaltstoffe aus dem Kaffeemehl in den Kaffeeextrakt übergehen können. Der Kaffeeextrakt erhält damit ein volleres und kräftigeres Kaffeearoma.

Über die Anordnung der Rippen kann außerdem ein gewünschter Abflusswiderstands im Padhalter eingestellt werden. Der Abflusswiderstand des Padhalters kann vor allem bei Niederdruck-Kaffeemaschinen an Bedeutung gewinnen, die mittels eines Durchlauferhitzers betrieben werden. Um eine Überhitzung des Durchlauferhitzers bei Verzicht einer aufwändigen Steuerung des Durchflusses zu vermeiden, ist für einen minimalen Durchfluss zu sorgen. Andernfalls kann es zu Betriebsstörungen kommen. Durch Anordnung der Rippen im Padhalter und die dadurch hervorgerufene Regulierung des Abflusses kann vorteilhaft der günstigste Abflusswiderstand eingestellt werden, der einen Mindestdurchfluss durch den Durchlauferhitzer sicherstellt.

Die Rippen sind so angeordnet, dass sie einen radialen Ablauf des Kaffeeextrakts im Padhalter verhindern und ihm einen Fließweg mit mehreren Richtungsänderungen aufzwingen. Der Aufwand für die Herstellung des Padhalters soll möglichst gering gehalten werden und seine Reinigung möglichst einfach sein. Erfindungsgemäß weisen daher die Rippen einen unterbrochenen spiralförmigen Verlauf auf. Die Rippen bilden somit zwischen sich und der jeweils benachbarten Rippe einen ebenfalls spiralförmigen Strömungskanal. Jeder Kanal ist durch Querverbindungen, die durch die Unterbrechungen gebildet sind, mit dem benachbarten Kanal verbunden. Dadurch ist einerseits der unmittelbare radiale Ablauf des Kaffeeextraktes verhindert, der Kaffeeextrakt wird vielmehr im Padhalter zurückgehalten. Andererseits kann der Kaffeeextrakt, je näher er der Ablauföffnung kommt, dieser auf kürzeren Wegen zuströmen, ohne den langen Weg eines spiralförmigen Kanals nehmen zu müssen.

Dem Ziel einer Verlangsamung der Strömung im Padhalter kann auch die Anordnung der Unterbrechungen dienen. So können die Unterbrechungen nebeneinander liegender Rippen vorteilhaft derart aneinander angeordnet sein, dass eine radiale Strömung des Kaffeeextrakts zuverlässig verhindert ist. Demnach ist jeweils der Unterbrechung einer Rippe ein Wandabschnitt einer benachbarten Rippe zugeordnet. Dadurch wird die Strömung des Kaffeeextrakts in einen mäanderförmigen Verlauf gezwungen. Ein derartiger Verlauf verhindert einerseits einen direkten Abfluss, ohne der Strömung des Kaffeeextraktes andererseits eine bestimmte gleichförmige Richtungsänderung, insbesondere einen Drall mit der Gefahr von Turbulenzen aufzuzwingen.

Auch die Anordnung der Unterbrechungen der Rippen kann positiven Einfluss auf das Strömungsverhalten des Kaffeeextraktes ausüben. So hat es sich als vorteilhaft erwiesen, dass die Unterbrechungen die Rippen in eine Richtung auf die Ablauföffnung hin in kürzer werdende Abschnitte unterteilen. Je näher folglich die Rippen der Ablauföffnung kommen, umso mehr Unterbrechungen weisen sie auf. Demzufolge haben die zwischen den Rippen verlaufende Strömungskanäle in der Nähe der Ablauföffnung mehrere Querverbindungen als entfernt von ihr. Ein so ausgestatteter Padhalter bietet folglich in der Nähe der Ablauföffnung eine größere Querdurchströmbarkeit in einer Richtung quer zur Längsrichtung der spiralförmigen Kanäle. Je höher die Querdurchströmbarkeit, umso geringer ist der Einfluss des spiralförmigen Verlaufs der Rippen beziehungsweise Kanäle auf die Strömungsrichtung des Kaffeeextraktes. Die richtungsablenkende Funktion der Rippen nimmt also zur Ablauföffnung hin ab. Dadurch beruhigt sich die Strömung des Kaffeeextraktes und verliert, je näher sie der Ablauföffnung kommt, an Turbulenzen. Die größere Zahl an Durchbrechungen beziehungsweise Querverbindungen schaffen einen größeren Raum an der Ablauföffnung, sodass die Strömungsgeschwindigkeit des Kaffeeextrakts nicht künstlich erhöht wird. Auch dies trägt zur Beruhigung der Strömung bei.

Der Padhalter stellt das Unterteil einer Brühkammer dar, das im Betrieb mit einem Oberteil dichtend verbunden ist. Dazu weist der Boden des Padhalters einen an die Seitenwände angrenzenden und umlaufenden Wandbereich auf, der als Widerlager einer Dichtung zwischen dem Padhalter und dem Oberteil dient. Nach einer weiteren vorteilhaften Ausgestaltung der Erfindung ist der Randabschnitt des Bodens frei von Rippen. Dadurch wird eine gute Anlage der Dichtung auf dem Randbereich ermöglicht und somit im Betrieb der Kaffeemaschine eine gute Abdichtung zwischen dem Padhalter und dem Oberteil ermöglicht.

Im Allgemeinen wird der Randbereich größer dimensioniert als es die Dichtung alleine erfordern würde. Mit der darüber hinausgehenden Breite des Randbereichs wird eine flächige Randauflage des Kaffeepads geschaffen. Durch die rippenfreie Auflage des Kaffeepads in diesem Bereich wird verhindert, dass heißes Wasser das Pad umlaufen kann und somit ohne Extraktion von Inhaltstoffen aus dem Kaffeemehl in die Kaffeetasse gelangen kann. Nach einer weiteren vorteilhaften Ausgestaltung der Erfindung ist der derjenige zentrale Abschnitt des Bodens, der Rippen trägt, gegenüber dem Randbereich abgesenkt. Dadurch werden die Rippen unter der Druckbelastung des Pads im Padhalter weniger stark in die Unterseite des Pads eingedrückt. Dies reduziert Zugspannungen im Filterpapier des Pads und reduziert die Gefahr eines Einreißens des Softpads unter der für den korrekten Betrieb der Maschine erforderlichen Druckbelastung.

Die Gefahr eines Einreißens eines Softpads an seiner Unterseite kann noch weiter reduziert werden. Nach einer weiteren vorteilhaften Ausgestaltung der Erfindung ist der Zentralabschnitt des Bodens, der die Rippen trägt, so weit abgesenkt, dass die im Betrieb das Pad berührende Oberseiten der Rippen etwa in einer Ebene mit dem Randbereich liegen. Die Oberseiten der Rippen definieren zusammen mit dem Randbereich eine nahezu ebene Auflagefläche des Pads. Lediglich in den zwischen den Rippen verlaufenden Strömungskanälen erfährt die Unterseite des Softpads zunächst keine mechanische Unterstützung. Bei Bedarf können durch die Anordnung von Stützstiften weitere Auflageflächen für das Pad geschaffen werden. Der übrige Bereich aber bietet Abstützungsflächen, die in einer Ebene liegen und die die Zugbelastungen auf der Unterseite des Softpads weitgehend reduzieren.

Der zentrale abgesenkte Bereich weist im Allgemeinen einen Durchmesser auf, der geringer ist als der mit kaffeegefüllte Bereich des Softpads. Da der Randbereich keine Rippen trägt und daher weniger gut von Wasser durchströmt wird, bildet sich ein Ringbereich im Pad aus, der dadurch schlechter ausgelaugt wird. Nach einer weiteren vorteilhaften Ausgestaltung der Erfindung weist daher der Randbereich wenigstens einen von den Seitenwänden zum Zentralbereich verlaufenden Kanal auf. Dieser Kanal unterbricht die satte Auflage des Pads im Randbereich und ermöglicht ein Abfließen von Eluat, das durch Auslaugen des Randbereichs des Softpads gebildet wird. Damit kann folglich auch das Kaffeemehl im äußeren Randbereich des Softpads zum Auslaugen mit erfasst werden. Die Anordnung eines derartigen Kanals kann auch gezielt dazu eingesetzt werden, ein Umlaufen des Kaffeepads in begrenztem Maße zu ermöglichen. Die gezielte Umläufigkeit des Softpads kann eingesetzt werden, um bei Bedarf einen milderen Kaffeegeschmack zu erzielen.

Die Anordnung eines derartigen Kanals im Randbereich des Bodens des Padhalters darf selbstverständlich nicht den Abflusswiderstand des Padhalters negativ beeinflussen. Nach einer weiteren vorteilhafteren Ausgestaltung der Erfindung verläuft der Kanal daher spiralförmig durch den Randbereich und mündet in einen Zwischenraum zwischen zwei spiralförmig verlaufenden Rippen. Damit kann bei Anordnung eines Kanals im Randbereich die Konfiguration der Rippen im Zentralbereich des Padhalters unverändert beibehalten werden, ohne dass sich der Abflusswiderstand des Padhalters negativ verändert. Denn über die Krümmung des spiralförmigen Verlaufs des Kanals kann eine dem Abflusswiderstand des übrigen Padhalters angepasste Strömungsgeschwindigkeit des Kaffeeextrakts eingestellt werden. Dazu ist es günstig, einen Strömungskanal zwischen zwei Rippen münden zu lassen, um kein ungewünschtes Stauen des Kaffeeextrakts beim Eintritt in den zentralen Bereich zu erzeugen.

Um nicht einzureißen, muss die Unterseite des Softpads auch über der zentralen Ablauföffnung des Padhalters eine Abstützung erfahren. Nach einer weiteren vorteilhaften Ausgestaltung der Erfindung sind daher unmittelbar an der Ablauföffnung Stützstifte angeordnet, die hinsichtlich ihrer Anzahl und Anordnung so ausgelegt sind, dass sie das Pad zuverlässig abstützen. Andererseits dürfen sie den Ablauf des Extraktes nicht negativ beeinflussen oder gar behindern. Ihre Anzahl und Anordnung ist also so zu bestimmen, dass sie kein Stauen des Kaffeeextraktes vor der Ablauföffnung bewirken. Sie sind daher unter Umständen insbesondere unabhängig von der Anzahl und Lage der Rippen anzuordnen. Das Prinzip der Erfindung wird im Folgenden anhand einer Zeichnung beispielshalber noch näher erläutert. In der Zeichnung zeigen:
- Figur 1:: eine perspektivische Darstellung eines erfinderischen Padhalters,
- Figur 2:: eine Draufsicht auf den Padhalter gemäß 1,
- Figur 3:: eine Schnittansicht des Padhalters, und
- Figur 4:: eine Schnittansicht des Padhalters mit einem eingelegten Softpad.

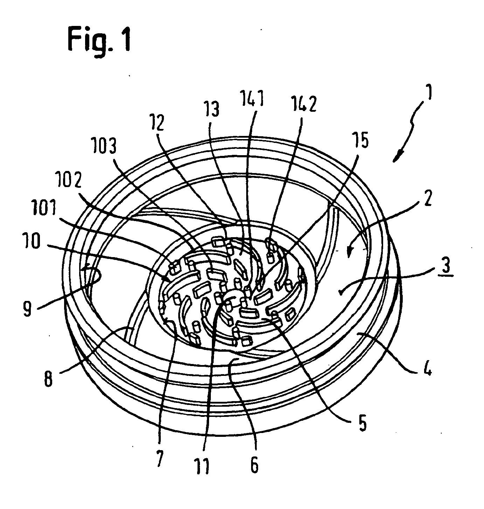

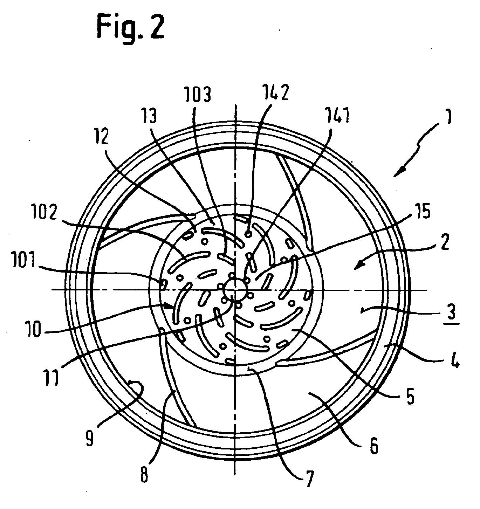

Ein erfindungsgemäßer Padhalter 1, wie ihn die Figuren 1 bis 3 zeigen, umfasst im Wesentlichen ein Aufnahmebecken 2, in das ein nicht dargestelltes Pad eingelegt werden kann. Das Aufnahmebecken 2 wird von einem Boden 3 und einer ringförmig umlaufenden Seitenwand 4 gebildet. Der Boden 3 gliedert sich in einen zentralen Bereich 5 und einen Randbereich 6. Der zentrale Bereich 5 ist gegenüber dem Randbereich 6 abgesenkt. Den Übergang dazwischen bildet eine ringförmig verlaufende Schräge 7. Der Randbereich 6 ist durchzogen von vier spiralförmig gekrümmten Kanälen 8, die von einer Innenseite 9 der Seitenwand 4 bis zur ringförmigen Schräge 7 hin verlaufen. Der zentrale abgesenkte Bereich 5 des Bodens 3 trägt acht Rippenzüge 10. Die Rippenzüge 10 setzen sich aus mehreren Rippenabschnitten, nämlich einem kurzen Rippenabschnitt 101, einem langen 102 und einem mittellangen 103 zusammen. Sie weisen ebenfalls einen spiralförmig gekrümmten Verlauf von der Schräge 7 zu einer zentralen Ablauföffnung 11 hin auf. Jeder Rippezug 10 beschreibt also einen bogenförmigen Verlauf, der durch zwei Durchlässe 12 unterbrochen ist. Damit bildet sich zwischen jeweils zwei Rippenzügen 10 ein Strömungskanal 13 aus, der von der Schräge 7 zur Ablauföffnung 11 hin ebenfalls einen spiralförmigen Verlauf nimmt. Jeweils zwei benachbarte Strömungskanäle 13 sind dabei über die Durchlässe 12 miteinander verbunden. Die Ablauföffnung 11 ist umgeben von sechs zentralen Stützstiften 141, die sich gleichmäßig um den Umfang der Ablauföffnung 11 verteilen. Weitere, äußere Stützstifte 142 befinden sich in den Strömungskanälen 13.

Die Rippenzüge 10 sind durch die Durchlässe 12 in die drei unterschiedlich langen Rippenabschnitte 101, 102, 103 unterteilt. Der längste Rippenabschnitt 102 ist dabei dem Randbereich 6 näher angeordnet als der mittellange Rippenabschnitt 103. Dieser ist der Ablauföffnung 11 näher angeordnet. Die Durchlässe 12 sind so positioniert, dass in einer Richtung quer zur Längsrichtung der Rippenzüge 10 sich jeweils wieder ein benachbarter Rippenabschnitt 102, 103 und kein weiterer Durchlass 12 befindet.

In einer Richtung auf die Ablauföffnung 11 hin enden die Rippenzüge 10 weit vor der Ablauföffnung 11 und mit großem Abstand gegenüber den Stiften 141. Es ergeben sich dadurch zwischen den ablaufseitigen Enden der Rippenzügen 10 und den Stiften 141 breite Passagen 15.

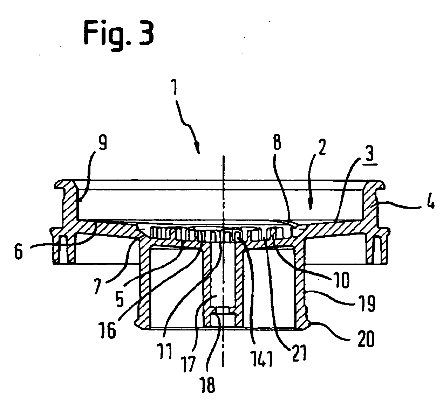

Sowohl der Randbereich 6 als auch der zentrale Bereich 5 des Bodens 3 sind zur zentralen Ablauföffnung 11 hin leicht trichterförmig geneigt, wie Figur 3 zeigt. Der zentrale Bereich 5 des Bodens 3 ist gegenüber dem Randbereich 6 abgesenkt angeordnet. Das Maß der Tiefe der Absenkung des zentralen Bereichs 5 entspricht in etwa der Höhe der Rippenzüge 10. Ihre Oberflächen 16 liegen damit in etwa in der Ebene des Randbereichs 6. Damit ergibt sich quasi eine von den Strömungskanälen 13 durchbrochene Auflagefläche für das Kaffeepad sowohl auf dem Randbereich 6 als auch auf dem Oberflächen 16 der Rippenzüge 10.

Unterhalb der zentralen Ablauföffnung 11 schließt sich ein Kanal 17 an, der eine Halterung 18 für ein nicht dargestelltes Düsenblech aufweist. Konzentrisch um den Kanal 17 herum ist ein rohrförmiger Kragen 19 angeordnet, mit dem der Padhalter 1 in einer nicht dargestellten Bedienungsaufnahme befestigt werden kann. Der Padhalter 1 kann mittels Rastnasen 20 in der Aufnahme verrastet werden.

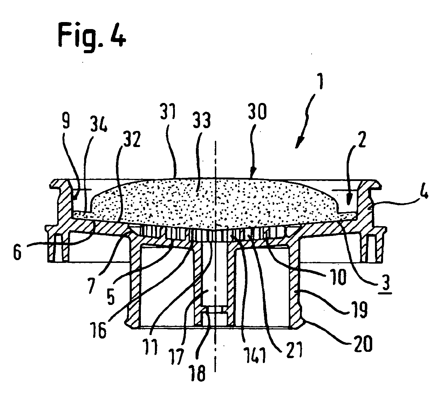

Figur 4 zeigt eine Schnittansicht durch einen Padhalter 1 mit einem eingelegten Softpad 30. Das Softpad 30 besteht aus zwei Filterpapierlagen, von denen eine eine Oberseite 31 und eine andere eine Unterseite 32 bildet. Zwischen der Oberseite 31 und der Unterseite 32 befindet sich Kaffeemehl 33. An ihren Rändern sind die Oberseite 31 und die Unterseite 32 zu einer umlaufenden Kante 34 fest miteinander verbunden. Das Softpad 30 liegt mit seiner Unterseite 32 auf dem Boden 3 des Padhalters 1 auf. Der Randbereich 6 bietet dazu eine nahezu vollflächige Auflage, die lediglich an vier Stellen durch die Kanäle 8 unterbrochen ist. Im abgesenkten zentralen Bereich 5 wird die Unterseite 32 des Pads 30 über die Rippenzüge 10 und die äußeren Stützstifte 142 und über der Ablauföffnung 11 durch die zentralen Stifte 141 abgestützt. Dadurch wird unterhalb des Pads ein Raum 21 geschaffen. Er öffnet sich über die zentrale Ablauföffnung 11 in den Kanal 17.

Wird nun ein Pad 30 in den Padhalter 1 eingelegt, um Kaffee zu brühen, so verschließt eine nicht dargestellte Oberseite den Padhalter 1. Der Padhalter 1 und die Oberseite bilden dann gemeinsam eine Brühkammer. Ein Softpad 30 wird im Brühprozess von ihrer Oberseite her mit unter Druck stehendem heißen Wasser beaufschlagt. Das Wasser dringt durch das Kaffeemehl 33 hindurch und laugt es aus. An der Unterseite 32 des Pads 30 tritt darauf hin Kaffeeextrakt aus. Er gelangt auf den Boden 3 des Padhalters 1. Der Boden 3 ist so ausgebildet, dass das Softpad 30 möglichst gleichmäßig ausgelaugt wird. Der entstehende Kaffeeextrakt, der zunächst senkrecht durch das Softpad 30 hindurch tritt, auf dem Boden 3 des Padhalters 1 umgelenkt wird und überwiegend horizontal der zentralen Ablauföffnung 11 zustrebt, soll anschließend in möglichst beruhigter, laminarer Strömung in den senkrecht verlaufenden Kanal 17 gelangen. Dabei ist der Abflusswiderstand des Padhalters 1 so zu bemessen, dass einerseits eine ausreichende Aufenthaltsdauer des Wassers innerhalb des Pads 30 sichergestellt ist, damit es vollständig ausgelaugt werden kann. Dies dient einem kraftvollen und runden Kaffeearoma. Andererseits kann es aus maschinentechnischen Gründen erforderlich sein, den Abflusswiderstand nicht zu hoch zu wählen, um Betriebsstörungen zu vermeiden. Um den erforderlichen Abflusswiderstand einzustellen, sind die Kanäle 8 und die Rippenzüge 10 nach Anzahl, Verlauf und Krümmung zu dimensionieren.

Wasser, das in einem mittleren Bereich auf das Pad 30 trifft, tritt auf der Unterseite 32 im zentralen Bereich 5 in den Padhalter 1 ein. Es sammelt sich dort im Bereich der mittellangen Rippenabschnitte 103 und in dem Raum, den die Passagen 15 vor der zentralen Ablauföffnung 11 bilden. Anschließend tritt es zwischen den zentralen Stützstiften 141 hindurch und gelangt über die zentrale Ablauföffnung 11 in den Kanal 17.

Kaffeeextrakt dagegen, der etwas dezentraler aus dem Softpad 30 austritt, gelangt zum Beispiel im Bereich der langen Rippenabschnitte 102 auf den Boden 3 des Padhalters 1. Die langen Rippen verwehren ihm einen direkten radialen Zufluss zur zentralen Ablauföffnung 11. Sie zwingen ihm vielmehr zunächst eine tangentiale Komponente auf, solange bis das Kaffeeextrakt auf einen Durchlass 12 trifft. Erst hier kann es den zunächst spiralförmigen Lauf abbrechen und einen direkteren Weg auf die zentrale Ablauföffnung 11 nehmen. Durch diesen aufgezwungenen längeren Weg und die erforderliche Richtungsänderung wird der Kaffeeextrakt in einem äußeren Randraum des zentralen Bereichs 5 zunächst zurückgehalten. Dadurch verzögert sich der Ablauf des Kaffeeextrakts innerhalb des Padhalters 1 geringfügig. Dies bewirkt einen gleichmäßigeren Zustrom des Kaffeeextrakts an der zentralen Ablauföffnung 11, was wiederum Turbulenzen im Kaffeeextrakt verhindert. Zugleich ermöglicht die Retention des Kaffeeextraktes und die große Anzahl von Durchlässen 12, dass sich der Kaffeeextrakt im zentralen Bereich 5 gleichmäßig verteilen kann, falls er zum Beispiel infolge einer ungleichen Lagerung des Kaffeemehls 33 im Pad 30 ungleichmäßig verteilt in den zentralen Bereich 5 gelangen sollte. Die Durchlässe 12 sorgen also für eine gute Querdurchströmbarkeit des zentralen Bereichs 5 und damit für ein gleichmäßiges Fließverhalten des Kaffeeextraktes in der Passagen 15 vor der zentralen Ablauföffnung 11.

Der mit Kaffeemehl 30 gefüllte Kissenbereich des Softpads 30 liegt mit einem äußeren ringförmigen Abschnitt auf dem Randbereich 6 auf. Der Raum 21 unterhalb des Pads reicht also nicht bis unter diesen Randabschnitt. Gleichwohl entsteht auch hier Eluat, das der Ablauföffnung 11 zugeführt werden soll. Um dieses Eluat nicht zu einem horizontalen Abfluss durch das Kaffeepad 30 und damit gegebenenfalls zu einem Aufstauen innerhalb des Kaffeepads 30 zu zwingen, sind ihm durch die Kanäle 8 Abschlussmöglichkeiten geboten. Entsprechend dem geringeren Volumen des abzuführenden Eluats im Randbereich 6 bieten die Kanäle 8 einen deutlich geringeren Durchflussquerschnitt als ihn der zentrale Bereich 5 zur Verfügung stellt. Ein Ablaufen aus dem Randbereich 6 wird zudem durch die ringförmig verlaufende Schräge 7 begünstigt. Um jedoch zu keinem Stau direkt am Übergang zwischen dem zentralen Bereich 5 und der ringförmigen verlaufenden Schräge 7 zu erzeugen, weil hier die kurzen Rippenabschnitte 101 unter einem spitzen Winkel auf die Schräge 7 treffen, sind hier bereits nach einem kurzen Verlauf der Rippenzüge 10 erste Durchlässe 12 angeordnet.

Die Kanäle 8 reichen bis zur Innenseite 9 der Seitenwand 4 hinaus. In diesem Bereich liegt nur noch die Kante 34 des Pads 30 auf, von woher kein Eluat mehr zu erwarten ist. Diese Abschnitte der Kanäle 8 können also zu einer gezielten Zufuhr von extraktfreiem Wasser benutzt werden, sei es einerseits, um den Abflusswiderstand des Padhalters einzustellen oder sei es andererseits, um dem Kaffeeextrakt einen weniger kräftigen Geschmack zu verleihen.

Da es sich bei dem vorhergehenden, detailliert beschriebenen Aufbau des Padhalters um ein Ausführungsbeispiel handelt, kann er in üblicher Weise vom Fachmann in einem weiten Umfang modifiziert werden, ohne den Bereich der Erfindung zu verlassen. Insbesondere können auch die konkreten Ausgestaltungen der Rippenzüge in anderer Form als in der hier beschriebenen erfolgen, solange sie den genannten Zweck erfüllen. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: - Padhalter
- 2: - Aufnahmebecken
- 3: - Boden
- 4: - Seitenwand
- 5: - zentraler Bereich
- 6: - Randbereich
- 7: - Schräge
- 8: - Strömungskanal
- 9: - Innenseite
- 10: - Rippenzug
- 101: - kurzer Rippenabschnitt
- 102: - langer Rippenabschnitt
- 103: - mittellanger Rippenabschnitt
- 11: - zentrale Ablauföffnung
- 12: - Durchlass
- 13: - Kanal
- 141: - zentraler Stützstift
- 142: - äußerer Stützstift
- 15: - Passage
- 16: - Oberseite der Rippenzüge 10
- 17: - Kanal
- 18: - Halterung
- 19: - Kragen
- 20: - Rastnase
- 21: - Raum
- 30: - Softpad
- 31: - Oberseite des Softpads 30
- 32: - Unterseite des Softpads 30
- 33: - Kaffeemehl
- 34: - Kante

## Patentansprüche

1. Padhalter (1), der als Unterteil zusammen mit einem Oberteil eine Brühkammer insbesondere einer Niederdruckkaffeemaschine bildet und zur Aufnahme eines Softpads (30) ein Aufnahmebecken (2) umfasst, das von einem in der Betriebslage im Wesentlichen waagrechten Boden (3) und dazu senkrecht aufsteigenden Seitenwänden (4) gebildet ist, welcher Boden (3) Rippen (10) und eine zentrale Ablauföffnung (11) zur Ableitung des Kaffeeextrakts umfasst, **dadurch gekennzeichnet, dass** die einen unterbrochenen spiralförmigen Verlauf aufweisenden Rippen (10) sich zur Regulierung des Abflusses zur Ablauföffnung (11) hin erstrecken und einen schlangenförmigen Fließweg des Extrakts erzwingen.

2. Padhalter nach Anspruch 1, **dadurch gekennzeichnet, dass** die Unterbrechungen (12) nebeneinander liegender Rippen (10) derart angeordnet sind, dass eine radiale Strömung des Extrakts verhindert ist.

3. Padhalter nach Anspruch 1 oder 2, **dadurch gekennzeichnet, dass** die Unterbrechungen (12) die Rippen (10) in eine Richtung auf die Ablauföffnung (11) hin in kürzer werdende Abschnitte unterteilen.

4. Padhalter nach einem der obigen Ansprüche mit einem an die Seitenwände (4) angrenzenden umlaufenden Randbereich (6) als Widerlager einer Dichtung zwischen dem Padhalter (1) und dem Oberteil, **dadurch gekennzeichnet, dass** der Randabschnitt (6) des Bodens (3) frei von Rippen (10) ist.

5. Padhalter nach obigem Anspruch, **dadurch gekennzeichnet, dass** derjenige Abschnitt (5) des Bodens (3), der Rippen (10) trägt, gegenüber dem Randbereich (6) abgesenkt ist.

6. Padhalter nach Anspruch 5, **dadurch gekennzeichnet, dass** der Abschnitt (5) so weit abgesenkt ist, dass die im Betrieb das Pad (1) berührenden Oberflächen (16) der Rippen (10) etwa in einer Ebene mit dem Randbereich (6) liegen.

7. Padhalter nach einem der Ansprüche 4 bis 6, **dadurch gekennzeichnet, dass** der Randbereich (6) einen von den Seitenwänden (4) zum Abschnitt (5) verlaufenden Kanal (8) aufweist.

8. Padhalter nach obigem Anspruch, **dadurch gekennzeichnet, dass** der Kanal (8) spiralförmig verläuft und in einen Zwischenraum (13) zwischen zwei spiralförmig verlaufenden Rippen (10) mündet.

9. Padhalter nach einem der obigen Ansprüche, **dadurch gekennzeichnet, dass** unmittelbar an der Auslauföffnung (11) Stützstifte (14) angeordnet sind, die hinsichtlich ihrer Anzahl so ausgelegt sind, dass sie das Pad (1) zuverlässig abstützen, ohne den Durchfluss des Extrakts zu behindern.

## Claims

1. Pad holder (1) which as a lower part forms together with an upper part a brewing chamber, particularly of a low-pressure coffee machine, and for reception of a soft pad (30) comprises a receiving basin (2) which is formed by a base (3) substantially horizontal in the operating position and side walls (4) rising perpendicularly relative thereto, which base (3) has ribs (10) and a central outlet opening (11) for discharge of the coffee extract, **characterised in that** the ribs (10), which have an uninterrupted spiral course, extend towards the outlet opening (11) for regulation of the outflow and constrain a winding flow path of the extract.

2. Pad holder according to claim 1, **characterised in that** the interruptions (12) of mutually adjacent ribs (10) are so arranged that a radial flow of the extract is prevented.

3. Pad holder according to claim 1 or 2, **characterised in that** the interruptions (12) subdivide the ribs (10) into sections which become shorter in a direction towards the outlet opening (11).

4. Pad holder according to any one of the preceding claims with an encircling edge region (6), which adjoins the side walls (4), as counter-bearing of a seal between the pad holder (1) and the upper part, **characterised in that** the edge section (6) of the base (3) is free of ribs (10).

5. Pad holder according to the preceding claim, **characterised in that** that section (5) of the base (3) carrying ribs (10) is lowered relative to the edge region (6).

6. Pad holder according to claim 5, **characterised in that** the section (5) is lowered to such an extent that the surfaces (16), which in operation contact the pad (1), of the ribs (10) lie approximately in the same plane as the edge region (6).

7. Pad holder according to any one of claims 4 to 6, **characterised in that** the edge region (6) has a channel (8) extending from the side walls (4) to the section (5).

8. Pad holder according to the preceding claim, **characterised in that** the channel (8) extends spirally and opens into an intermediate space (13) between two spirally extending ribs (10).

9. Pad holder according to any one of the preceding claims, **characterised in that** arranged directly at the outlet opening (11) are support pins (14) which with respect to their number are so designed that they reliably support the pad (1) without obstructing the throughflow of the extract.

## Revendications

1. Support de dosette (1), lequel, en tant que partie inférieure, forme avec une partie supérieure une chambre d'infusion notamment d'une machine à café à basse pression et comprend un bassin de réception (2) pour le logement d'une dosette en papier-filtre (30), lequel bassin de réception est formé par un fond (3) essentiellement horizontal en position de fonctionnement et par des parois latérales (4) montant perpendiculairement par rapport au fond, lequel fond (3) comprend des nervures (10) et une ouverture d'évacuation centrale (11) pour l'évacuation de l'extrait de café, **caractérisé en ce que** les nervures (10) présentant une allure interrompue en forme de spirale s'étendent en direction de l'ouverture d'évacuation (11) pour réguler l'écoulement et forcent un trajet d'écoulement en serpentin de l'extrait.

2. Support de dosette selon la revendication 1, **caractérisé en ce que** les interruptions (12) de nervures (10) situées les unes à côté des autres sont disposées de manière à ce qu'un écoulement radial de l'extrait soit empêché.

3. Support de dosette selon la revendication 1 ou 2, **caractérisé en ce que** les interruptions (12) divisent les nervures (10) en sections devenant plus petites dans une direction tournée vers l'ouverture d'évacuation (11).

4. Support de dosette selon l'une quelconque des revendications précédentes, comprenant une partie de bord périphérique (6) adjacente aux parois latérales (4) en tant que culée d'un joint entre le support de dosette (1) et la partie supérieure, **caractérisé en ce que** la section en bord (6) du fond (3) est exempte de nervures (10).

5. Support de dosette selon la revendication précédente, **caractérisé en ce que** la section (5) du fond (3) qui porte des nervures (10) est abaissée par rapport à la partie de bord (6).

6. Support de dosette selon la revendication 5, **caractérisé en ce que** la section (5) est abaissée de manière à ce que les surfaces (16), touchant la dosette (1) pendant le fonctionnement, des nervures (10) soient situées à peu près dans un plan avec la partie de bord (6).

7. Support de dosette selon l'une quelconque des revendications 4 à 6, **caractérisé en ce que** la partie de bord (6) présente un canal (8) s'étendant des parois latérales (4) vers la section (5).

8. Support de dosette selon la revendication précédente, **caractérisé en ce que** le canal (8) s'étend en forme de spirale et aboutit dans un espace intermédiaire (13) situé entre deux nervures (10) s'étendant en forme de spirale.

9. Support de dosette selon l'une quelconque des revendications précédentes, **caractérisé en ce que** des goupilles d'appui (14) sont disposées directement sur l'ouverture d'évacuation (11), lesquelles, en ce qui concerne leur nombre, sont conçues de manière à ce qu'elles supportent la dosette (1) de manière fiable sans empêcher l'écoulement de l'extrait.
